# DEMANDE DE BREVET EUROPEEN

(11) **EP 1 845 280 A1**
(43) Date de publication de la demande: **17.10.2007**
(21) Numéro de dépôt: 06300365.1
(22) Date de dépôt: 13.04.2006
(51) Int. Cl.: F16F 9/58, F16F 3/093

(54) **Tampon de butée pour jambe de suspension**

(71) Demandeur: Delphi Technologies, Inc., Troy, MI 48007 (US)
(72) Inventeur: Le Moigne, Thierry, 60560 Orry la Ville (FR)
(74) Mandataire: Laget, Jean-Loup

(57) **Abrégé**

Tampon de butée (128) en matière flexible et/ou compressible destiné à une jambe de suspension (121), caractérisé en ce que ledit tampon de butée (128) comprend au moins deux pièces :
- un coussinet de début de course (129), dit premier coussinet, destiné à amortir les chocs en début de course de compression de l'amortisseur, dans une zone dite de confort,
- un manchon (130) qui assure la fonction d'amortissement sur le reste de la course de compression,
le manchon (130) étant relié à une de ses extrémités (130a) à au moins un coussinet (129, 131), de façon qu'il fasse saillie à l'extérieur (129) dudit manchon (130) et/ou à l'intérieur (131) dans la direction axiale (X) de ce dernier, ledit manchon (130) étant destiné à être relié à son autre extrémité (130b) par exemple à la caisse d'un véhicule ou à un bâti d'une machine.

## Description

La présente invention concerne une jambe de suspension, et en particulier un tampon de butée de ladite jambe de suspension destiné à amortir les chocs. Elle concerne également tout système de suspension utilisant des tampons de butée intégrant la fonction d'absorber l'énergie cinétique des organes de suspension, que ce soit dans les zones de confort « roulage » ou de fin de course « choc ».

Le tampon de butée d'une jambe de suspension peut être utilisé dans tout système nécessitant un amortisseur et/ou un ressort. Il peut être en effet utilisé pour isoler les sources de vibration dans des équipements industriels et dans des machines, mais également dans les véhicules automobiles pour amortir les mouvements de caisse et absorber les vibrations de roulement.

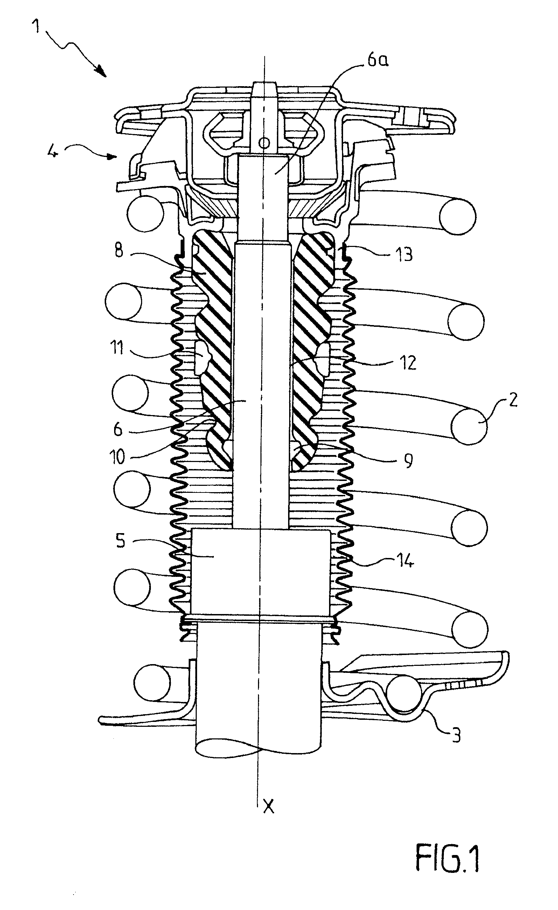

Une jambe de suspension telle que représentée à la figure 1 est connue dans l'état de la technique. Ladite jambe de suspension 1 représentée sur cette figure est dite « au repos ». Cet état correspond à une décompression de l'amortisseur, c'est-à-dire qu'il n'y a pas de mouvements de caisse ou de vibrations à amortir. Cette jambe de suspension 1 pour véhicule comprend un ressort 2 lié à une de ses extrémités à une coupelle 3 et à l'autre extrémité à un palier de raccordement 4 de caisse. Entre ces deux extrémités est montré un amortisseur comprenant un cylindre 5 lié à la coupelle 3 dans lequel coulisse une portion de tige d'amortisseur 6. L'extrémité libre 6a de la tige 6 est fixée à l'intérieur du palier de raccordement 4. Un tampon de butée 8, le plus souvent en mousse de polyuréthane ou en caoutchouc, est pourvu d'un trou axial afin d'entourer la tige de piston 6 sur une certaine longueur (de l'ordre de 70% ou plus de la longueur de la tige de piston 6), sans pour autant avoir une zone de contact avec cette dernière. Un espace 12 est en effet formé entre la tige de piston 6 et le tampon 8 Ce tampon de butée 8, formé en une seule pièce, est assez volumineux. Par ailleurs, il présente des creux annulaires internes 9 et externes 10 afin de former des plis lors de la compression de l'amortisseur. Cet agencement permet une meilleure compression du tampon de butée. En outre, un anneau raidisseur 11 en matière plastique situé le plus souvent en milieu du tampon de butée 8 est parfois nécessaire. Celui-ci a pour fonction de limiter les déformations radiales du tampon, d'améliorer sa durée de vie (endurance) et d'entraîner une raideur accrue dans la courbe de compression. Par raideur accrue de la courbe de compression, on entend que pour un même déplacement du cylindre sur la tige de piston, il faut fournir un effort supplémentaire. Par ailleurs, afin de retenir le tampon de butée lors de la fin de course de compression de l'amortisseur, une coupelle de retenue 13 est nécessaire. Cette coupelle sert également à fixer et localiser la butée dans l'assemblage. Elle est disposée entre le palier de raccordement 4 et l'extrémité du tampon de butée 8 la plus proche dudit palier 4. Elle permet de contenir le tampon de butée lors de son écrasement maximal et d'assurer la raideur dans la courbe de compression, notamment en fin de course de compression de l'amortisseur. Cette coupelle peut être intégrée au palier de raccordement 4 : à une butée à bille ou à un bloc filtrant supérieur de raccordement, ou être un composant spécifique indépendant. En outre, un soufflet 14 est disposé entre la coupelle 3 et le palier de raccordement 4 afin de protéger des agressions extérieures : le cylindre 5, la tige de piston 6, ainsi que le tampon de butée 8. Afin de rattacher ce soufflet 14 à la coupelle de retenue 13, une pièce supplémentaire peut être prévue (anneau ou toutes autres pièces rigides nécessitant des moyens d'attache à des embouts solides).

Cependant, ce système d'amortissement usuellement utilisé, notamment par les fabricants de véhicules automobiles, présente divers inconvénients.

Tout d'abord, le matériau du tampon de butée 8 doit présenter des propriétés spécifiques afin de répondre à des niveaux de contraintes élevés que ce soit pour le domaine automobile ou celui des équipements industriels. Ces contraintes s'expriment en terme de course et de forme de compression, mais aussi de durée de vie qui doit être la plus longue possible. Pour répondre à ces contraintes, le type de matériau habituellement utilisé est la mousse de polyuréthane. Cependant, ce matériau présente l'inconvénient d'avoir un coût élevé. Cet inconvénient est d'autant plus préjudiciable que les amortisseurs selon l'état de la technique utilisent un tampon volumineux qui nécessite donc une grande quantité de matière.

De plus, le tampon de butée selon l'art antérieur requiert un anneau raidisseur 11 en matière rigide qui limite la déformation radiale du tampon de butée lors de la course de compression de l'amortisseur.

Les creux internes 9 et externes 10 sont par ailleurs nécessaires afin d'améliorer la compression de mousse de polyuréthane de volume important. Toutefois, leur action reste limitée étant donné le volume important qu'occupe le tampon de butée dans un état de compression maximale.

Par ailleurs, dans ce type de système, il est aussi nécessaire d'avoir une coupelle de retenue 13 afin de retenir la mousse de polyuréthane lorsque la compression de l'amortisseur est maximale. Or, cette pièce occasionne une surpression de la portion de tampon 8 se situant près de la coupelle de retenue 13. Cette portion de tampon, trop sollicitée, se détériore alors. La coupelle de retenue génère de ce fait une diminution de la durée de vie du tampon de butée 8.

En outre, lors de la course de compression de l'amortisseur, la déformation axiale du tampon 8 s'accompagne également d'une déformation radiale vers la tige d'amortisseur 6. Ainsi, l'espace 12 entre la tige 6 et le tampon 8 est éliminé. La compression de l'amortisseur entraîne par conséquent des frottements du tampon de butée 8 sur la tige d'amortisseur 6 induisant des nuisances et des perturbations cinétiques.

De plus, une pièce supplémentaire est encore nécessaire afin d'attacher le soufflet de protection à la coupelle de retenue 13.

Enfin, le volume de mousse de polyuréthane le long de la tige est important afin d'obtenir une zone de confort pour de faibles chocs. En effet, plus la longueur du corps élastique le long de la tige d'amortisseur est importante et plus l'amortissement débutera tôt afin d'amortir les chocs de plus faibles importances et assurer ainsi un certain confort. Or, si il y a trop de matière compressible le long de la tige d'amortisseur, le tampon de mousse 8 va rapidement arriver en phase de butée lors de la compression de l'amortisseur. Ceci aura pour effet de réduire la longueur de course maximale et d'augmenter la « longueur morte ». La longueur morte correspond à la longueur de tampon 8 selon l'axe X de la tige 6 lorsque la compression de l'amortisseur est à son maximum. Ainsi, le confort d'amortissement, liée à la compression du tampon de butée sur toute la longueur de la course de compression de l'amortisseur, va être restreint.

La présente invention a pour but de proposer un nouveau tampon de butée qui évite tout ou partie des inconvénients précités.

A cet effet, dans une première variante l'invention a pour objet un tampon de butée destiné à une jambe de suspension, caractérisé en ce que ledit tampon de butée comprend au moins deux pièces :
- un coussinet de début de course, dit premier coussinet, destiné à amortir les chocs en début de course de compression de l'amortisseur, dans une zone dite de confort,
- un manchon qui assure la fonction d'amortissement sur le reste de la course de compression,
le manchon étant relié à une de ses extrémités au premier coussinet, de façon qu'il fasse saillie à l'extérieur dudit manchon, dans la direction axiale de ce dernier, ledit manchon étant destiné à être relié à son autre extrémité par exemple à la caisse d'un véhicule ou à un bâti d'une machine.

Le manchon est en effet destiné à être relié par exemple à la caisse d'un véhicule : à une butée à bille et/ou à un bloc filtrant de raccordement et/ou directement à une caisse d'un véhicule.

Un tel dispositif comprenant deux pièces : un premier coussinet et un manchon, présente l'avantage de créer « une première zone de confort » due au premier coussinet lors du début de course de compression de l'amortisseur, c'est-à-dire lorsque les chocs, les mouvements de caisse ou vibrations sont légers. Ainsi, ces derniers ne sont pas ressentis par l'utilisateur final, par exemple un conducteur de voiture.

Ainsi, l'invention permet d'obtenir un amortissement particulièrement performant, en référence au compromis ci-après : longueur de course de compression maximale (pour le confort) d'une part, et volume minimal du tampon de butée d'autre part.

Selon une seconde variante de réalisation, l'invention a pour objet un tampon de butée destiné à une jambe de suspension, caractérisé en ce que ledit tampon de butée comprend au moins deux pièces :
- un manchon qui assure la fonction d'amortissement au cours de la course de compression de l'amortisseur,
- un coussinet de fin de course, dit deuxième coussinet, destiné à servir de butée de fin de course de compression de l'amortisseur,
le manchon étant relié à une de ses extrémités au coussinet de fin de course, de façon qu'il fasse saillie à l'intérieur dudit manchon, dans la direction axiale de ce dernier, ledit manchon étant destiné à être relié à son autre extrémité par exemple à la caisse d'un véhicule ou à un bâti d'une machine.

Une telle réalisation du tampon de butée présente l'avantage d'établir une zone de butée supplémentaire assurant un confort en fin de course de compression de l'amortisseur. Cette fonction étant assurée par le coussinet de fin de course qui amortit les charges les plus élevées après que le manchon se soit déformé à son maximum de compression.

Avantageusement, le tampon de butée selon la première variante de réalisation comprend une troisième pièce : un coussinet de fin de course, dit deuxième coussinet, destiné à servir de butée de fin de course de compression de l'amortisseur, le deuxième coussinet étant relié à la même extrémité du manchon que le premier coussinet, de façon que le deuxième coussinet fait saillie à l'intérieur dudit manchon dans ladite direction axiale.

Ce dispositif présente l'avantage d'établir plusieurs zones de confort. Ainsi, une zone de confort est assurée aussi bien avec de faibles ou de grandes charges s'exerçant sur le tampon de butée.

Avantageusement, les coussinets sont agencés de façon qu'ils se déforment successivement lors de la course de compression avec peu ou pas d'interaction l'un sur l'autre.

Un tel agencement offre la possibilité d'obtenir plusieurs phases d'amortissement et ainsi d'augmenter la longueur de course maximale de compression de l'amortisseur. Comme indiqué plus haut, une plus grande longueur de course de compression de l'amortisseur permet d'établir un confort plus important pour des chocs de différentes intensités, du fait de la compression progressive des différentes parties du tampon de butée lors de l'amortissement.

Selon une caractéristique de l'invention le premier coussinet et le deuxième coussinet sont monobloc.

De préférence, l'extrémité du manchon qui est reliée à au moins un coussinet comprend une portée annulaire plane sensiblement perpendiculaire à ladite direction axiale, le(s) coussinet(s) prenant appui sur ladite portée lors de la course de compression de l'amortisseur.

Selon un mode de réalisation, les coussinets sont en appui sur ladite portée annulaire de part et d'autre de celle-ci.

Avantageusement, les coussinets sont reliés par un pont de matière d'épaisseur réduite qui chevauche le bord interne de ladite portée annulaire.

Selon une autre caractéristique de l'invention, le manchon est en forme de soufflet à un ou plusieurs plis, dont la partie médiane du ou des plis s'étend radialement vers l'extérieur.

Cette caractéristique permet d'augmenter la course de compression maximale (et donc le confort) car le manchon, lors de la course de compression, va se déformer radialement vers l'extérieur et non vers la tige d'amortisseur. Ceci permet par conséquent de réduire le volume de matière comprimé entre le cylindre et le palier de raccordement et ainsi de réduire la longueur morte.

Avantageusement, le manchon en forme de soufflet comprend un ou plusieurs plis dont l'épaisseur varie au sein du même pli et/ou entre deux plis distincts.

Cet agencement présente l'avantage d'optimiser la raideur et la course de compression maximale de la courbe de compression.

Selon une autre caractéristique, le manchon en forme de soufflet comprend au moins deux plis et une rondelle au niveau de la jonction de deux plis, de manière à rendre indépendant la déformation d'un pli par rapport à un autre lors de la course de compression de l'amortisseur.

De préférence, le pli le plus proche du ou des coussinets présente une raideur plus grande que le ou les autres plis.

Avantageusement, au moins une desdites extrémités du manchon présente un épaulement sur sa face intérieure, de sorte que lorsque le tampon est en fin de course de compression, ledit épaulement forme un logement pour le deuxième coussinet afin de limiter sa compression.

Ce mode de réalisation présente l'avantage de former un logement en fin de course de compression. Ce logement a pour fonction de contenir dans un environnement clos la mousse de polyuréthane lorsque celle-ci est écrasée. Ceci a pour effet d'éviter l'éclatement ou la dispersion radiale par rapport à l'axe X de ladite mousse, ainsi que sa compression au-delà d'une certaine limite. Par conséquent, le logement améliore la durée de vie du deuxième coussinet.

Avantageusement, les deux extrémités du manchon comprennent un épaulement en vis-à-vis sur la face inférieure, de façon à définir ensemble un logement pour le deuxième coussinet.

Selon une autre caractéristique, le manchon est en matière plastique déformable.

De préférence, les coussinets sont en matière flexible et/ou compressible, de préférence en mousse de polyuréthane.

Les matières du manchon et des coussinets permettent de préférence au tampon de butée de se contracter lors de la phase de compression et de se détendre lors de la phase de décompression et ceci, de manière élastique et réversible.

Avantageusement, lesdites extrémités du manchon sont rigides.

Il est alors possible de relier le tampon, par exemple, à un soufflet ou toutes autres pièces directement sur les extrémités du manchon qui sont en matière rigide et non en mousse, comme dans l'art antérieur. Ainsi, des pièces supplémentaires ne sont plus nécessaires.

La présente invention a également pour objet une jambe de suspension comprenant le tampon de butée selon l'un quelconque des caractéristiques précédentes, un palier de raccordement pour une tige d'amortisseur, ledit palier de raccordement étant destiné à être relié à une caisse de véhicule, une coupelle reliée à un cylindre d'amortisseur, un ressort situé entre ladite coupelle et le palier de raccordement, et éventuellement un soufflet de protection afin de protéger la jambe de suspension, une tige d'amortisseur coulissant dans le cylindre d'amortisseur, caractérisée en ce que le manchon du tampon de butée est relié à une de ses extrémités au palier de raccordement et le cas échéant à son autre extrémité au soufflet de protection, ledit cylindre d'amortisseur étant apte à venir en appui sur ledit tampon de butée lors de la course de compression.

Ce dispositif présente les avantages suivants : tout d'abord, la course de compression de l'amortisseur est augmentée. De plus, le manchon permet de protéger au moins partiellement la jambe de suspension de la poussière par exemple, même si on peut associer à ce dispositif un soufflet de protection. Par ailleurs, différentes zones de confort sont instaurées suivant les charges à amortir. En outre, la longueur morte est réduite, tandis que la longueur de course maximale est considérablement améliorée par rapport à l'art antérieur. Enfin, la quantité de matière de mousse de polyuréthane est aussi réduite, permettant ainsi une réduction du coût de fabrication.

De préférence, le premier coussinet est disposé, le cas échéant à l'intérieur du soufflet, de façon à venir en butée contre le cylindre lors du début de course de compression.

Avantageusement, le manchon dudit tampon de butée ne présente pas de zone de contact avec la tige d'amortisseur lors de la phase de compression et/ou de décompression.

Selon une caractéristique, les coussinets ne présentent pas de zone de contact avec la tige d'amortisseur sur 90% ou moins de la course de compression.

Les deux caractéristiques susmentionnées présentent l'avantage d'amoindrir considérablement la nuisance due aux frottements du tampon sur la tige d'amortisseur ainsi que les perturbations cinétiques.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

Sur ces dessins :
- la figure 1 représente une vue en coupe longitudinale d'un dispositif de suspension incluant un tampon de butée usuellement utilisé dans l'état de la technique, décrit ci-dessus ;
- la figure 2 représente une vue en coupe longitudinale d'un dispositif de suspension au repos incluant une première variante de réalisation du tampon de butée selon la présente invention;
- la figure 3 est une vue analogue à la figure 2 en fin de course d'amortissement;
- la figure 4 est un graphique montrant la course de compression du tampon de butée de la figure 2 en fonction de la charge appliquée.
- la figure 5 représente une vue en coupe longitudinale d'un dispositif de suspension incluant le tampon de butée selon une deuxième variante de réalisation,
- la figure 6 représente les étapes de compression du tampon de butée de la figure 5,
- la figure 7 est un graphique montrant le déplacement de la course de compression du tampon de la figure 5 en fonction de l'effort appliqué.

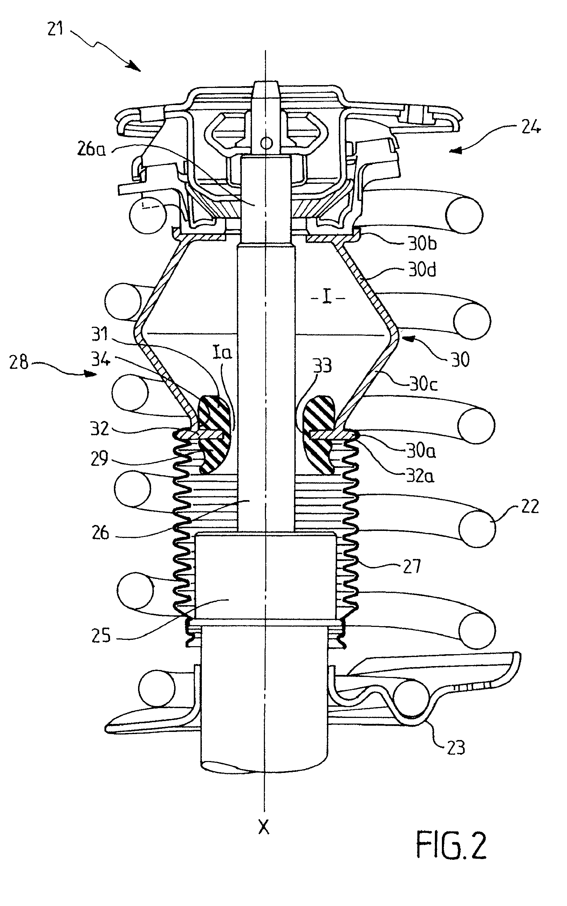

Sur la figure 2, un tampon de butée 28 selon la présente invention est illustré dans un dispositif de jambe de suspension 21 associé à un palier de raccordement 24 relié à une caisse de véhicule (non illustré). La jambe de suspension comprend un cylindre 25 dans lequel est disposée une tige de piston 26 coulissant selon l'axe de révolution X. Cette tige de piston 26 fait saillie à l'une des extrémités du cylindre 25. L'extrémité libre 26a de la tige de piston est fixée à l'intérieur du palier de raccordement 24. Ce dernier est destiné à être relié à une caisse de véhicule. L'autre extrémité du cylindre est reliée à un organe dont les déplacements doivent être amortis, par exemple à un bras de suspension (non illustré) portant une roue (non illustrée) dont les déplacements verticaux par rapport à la caisse du véhicule doivent être amortis.

La jambe de suspension comprend également une coupelle 23 de ressort qui est fixée au cylindre 25. Un ressort 22 de compression est disposé entre ladite coupelle 23 et ledit palier de raccordement 24. Ce ressort 22 est capable de se déformer selon l'axe X de la tige de d'amortisseur.

Le tampon de butée 28, tel que représenté sur la figure 2, comprend trois pièces : un premier coussinet 29 relié à un deuxième coussinet dit « coussinet de fin de course» 31. Ces deux coussinets sont eux même reliés à une extrémité 30a d'un manchon 30, le premier coussinet 29 faisant saillie à l'extérieur de l'extrémité 30a dudit manchon 30, tandis que le coussinet de fin de course 31 fait saillie à l'intérieur de l'extrémité 30a.

Ces deux coussinets 29, 31 sont en matière compressible qui peut être par exemple du caoutchouc, de la mousse de polyuréthane, mais de manière privilégiée de la mousse de polyuréthane. La mousse de polyuréthane présente en effet des caractéristiques techniques intéressantes et une bonne endurance. Ces deux coussinets 29, 31, même lorsqu'ils sont monobloc, présentent de faibles volumes, notamment par rapport aux tampons de butée usuellement utilisés selon l'art antérieur (Figure 1).

Le manchon 30 est en matière déformable, par exemple en matière plastique, de préférence en thermo plastique élastomère (TPE), comme le chlorure de polyvinyle (PVC), le polytétrafluoroéthylène (PTFE), le polystyrène ou des polyoléfines. L'obtention des propriétés du manchon peut également être liée à un procédé d'élaboration spécifique sur ces matières. Avantageusement, le thermoplastique élastomère utilisé pour la fabrication du manchon est le produit Hytrel® commercialisé par la société Dupont. Le manchon peut ainsi se déformer indéfiniment sans modifications sensibles de ses propriétés.

Le manchon 30 est en forme de deux troncs de cône 30c et 30d. Les deux troncs de cône sont coaxiaux et se rejoignent par leur grande base, de manière à former un soufflet à un pli. Cette jonction entre la grande base des deux troncs de cône 30c, 30d correspond à la partie médiane du pli ainsi formé. Cet agencement permet une déformation radiale du manchon 30 par rapport à l'axe X vers l'extérieur et ainsi de réduire la longueur morte. De plus, cet agencement permet lorsque l'amortisseur est en phase de repos ou de compression de maintenir un espace -I- entre le manchon 28 et la tige d'amortisseur 26. Cet espace -I-reste supérieur à la jonction de la grande base des troncs de cône 30c, 30d par rapport à leur petite base.

Le manchon 30 présente un épaulement 34 à l'extrémité qui est reliée aux coussinets 29, 31, formant ainsi un logement 35 pour le coussinet de fin de course 31.

Le manchon 30 est pourvu à son extrémité 30a d'une portée annulaire plane 32, sensiblement perpendiculaire à l'axe X. Cette portée annulaire 32 assure la fonction de séparation des coussinets 29, 31. Cette séparation par la portée annulaire 32 est préférable, notamment lorsque ceux-ci sont monobloc.

Lorsque les deux coussinets 29, 31 sont monoblocs, ils sont reliés par un pont de matière 33 de faible épaisseur de façon à ne former qu'un seul ensemble. Ce pont, représenté ici par une languette annulaire de mousse de polyuréthane, chevauche le bord interne de la portée annulaire 32 et relie le premier coussinet 29 au coussinet de fin de course 31 de manière que les coussinets 29, 31 soient en appui sur ladite portée annulaire 32 de part et d'autre de celle-ci. En raison de la faible épaisseur du pont 33 de matière, le premier coussinet 29 et le coussinet de fin de course 31 interagissent peu ou pas l'un sur l'autre. En outre, cet agencement est réalisé de manière que les coussinets 29, 31 ne présentent pas de zone de contact (espace -Ia-) avec la tige d'amortisseur 26 lors de la phase de repos de l'amortisseur.

Les coussinets peuvent être assemblés au manchon par emboîtement, par moulage ou par collage. De préférence, la fixation des coussinets 29, 31 sur l'extrémité 30a du manchon 30 se fera par simple emboîtement manuel. La pièce en mousse 29, 31 est comprimée sous la pression exercée par les doigts et se met en place à l'intérieur de la portée annulaire 32 du tampon de butée 28.

L'agencement du premier coussinet 29 au manchon peut être mis au point de différentes manières offrant ainsi une large gamme de courbes de compression possibles par rapport aux tampons de butée conventionnels.

Le coussinet de fin de course 31 présente une longueur et une forme qui sont définies de manière qu'il agisse seulement en fin de la course de compression de l'amortisseur. Le coussinet de fin de course constitue en effet un tampon supplémentaire pour amortir et arrêter les chocs les plus élevés, tels que par exemple la montée de façon abrupte d'un trottoir.

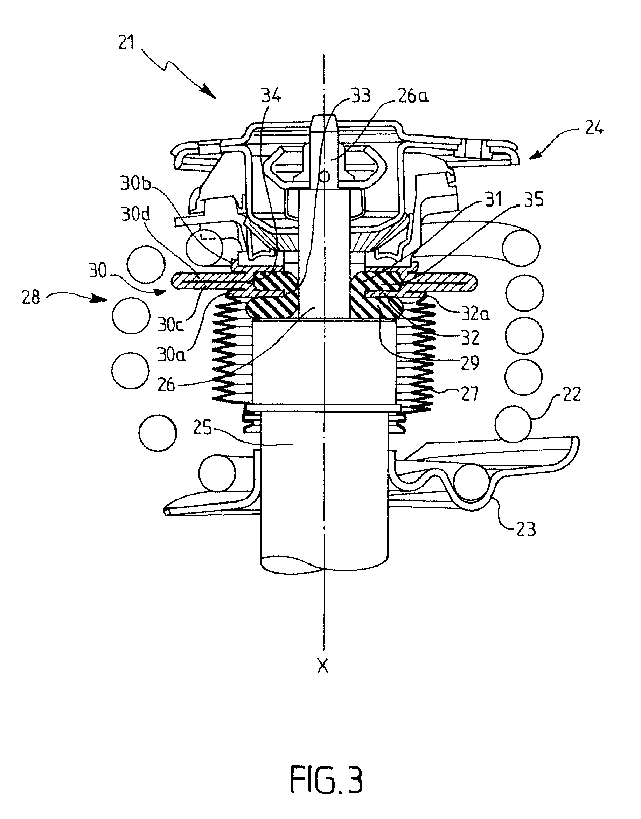

Le tampon de butée 28 est monté dans la jambe de suspension de façon que lors de la phase de repos (figure 2), celui-ci soit espacé (espace -I-) de la tige d'amortisseur 26. En outre, lors de la phase de compression (figure 3), les coussinets 29, 31 ne sont en contact avec la tige d'amortisseur 26 que sur environ les dix derniers pourcents de la course de compression, tandis que le manchon 30 ne présente pas de zone de contact avec ladite tige même lors de la course de compression. Ceci a pour effet d'atténuer considérablement les nuisances et les perturbations cinétiques. De plus, les frottements dus aux coussinets sont négligeables par rapport au bruit occasionné sur la caisse lors de la phase de compression maximale. En effet, en phase de compression maximale, c'est-à-dire lors d'amortissement de chocs élevés, tel que la montée rapide sur un dos-d'âne, les bruits extérieurs à l'amortisseur (par exemple, les bruits de caisse et autre bruits ambiants) sont beaucoup plus élevés que celui généré par le frottement des coussinets 29, 31 sur ladite tige d'amortisseur 26. Par conséquent, du début de course jusqu'à environ 90 % de la course de compression de l'amortisseur, donc pour des chocs générant peu de nuisance par rapport à l'amortisseur, les bruits et perturbations cinétiques induits par le frottement des coussinets 29, 31 sur la tige 26 sont négligeables. Ceci présente l'avantage d'un confort accru pour l'utilisateur, notamment pour le conducteur du véhicule.

La jambe de suspension 21 telle que représentée à la figure 2 comprend également un soufflet 27 qui est relié à la coupelle de ressort 23 et à l'extrémité 30a du tampon de butée 28. Plus précisément, le soufflet est relié à la portée annulaire 32, sur une partie radialement saillante 32a vers l'extérieur par rapport au soufflet 27. Ce soufflet 27 permet de protéger la jambe de suspension 21 sur le reste de sa longueur, c'est-à-dire celle non protégée par le manchon 30. Par conséquent, la longueur du soufflet 27 est réduite et sa position d'accrochage est optimisée par rapport aux jambes de suspension 1 selon l'art antérieur.

Un deuxième mode de réalisation est possible (non représenté). Les éléments de la jambe de suspension sont identiques au premier mode de réalisation et sont désignés par le même chiffre de référence et ne sont pas décrits de nouveau. Ici, le tampon de butée ne comprend pas de deuxième coussin de fin de course 31. Ainsi, le premier coussinet 29 fait saillie à l'extérieur d'une des extrémités 30a du manchon 30, l'autre extrémité 30b du manchon 30 étant destinée à être reliée à une caisse par l'intermédiaire du palier de raccordement 24. La fixation du premier coussinet 29 sur le manchon 30 se fait par l'intermédiaire d'un ajustement avec serrage, ou emboîtement ou tous autres moyens équivalents.

Un troisième mode de réalisation est possible (non représenté). Dans ce cas, le tampon de butée 30 ne comprend pas de premier coussinet 29. Ainsi, le coussinet de fin de butée fait saillie à l'intérieur d'une des extrémités 30a du manchon 30, l'autre extrémité 30b du manchon 30 étant destinée à être relié au palier de raccordement 24. La fixation du coussinet de fin de course 31 sur le manchon 30 se fait également, comme pour les autres modes de réalisation, c'est-à-dire par ajustement avec serrage, ou par simple emboîtement.

Ainsi le tampon de butée 28 ne nécessite pas de pièces supplémentaires tels qu'un anneau raidisseur 11 ou une coupelle de retenue 13. La présente invention ne requiert pas non plus un volume de mousse important qui augmenterait le coût de fabrication d'un tel tampon. Le dispositif est par conséquent simplifié par rapport à l'art antérieur (figure 1). En outre, comme montré ci-dessous, la course de compression est également étendue et cela afin d'assurer plus de confort lors de l'amortissement par rapport aux tampons de butée existants dans l'état de la technique.

Le fonctionnement de la jambe de suspension 21 va maintenant être décrit en se référant aux figures 2 à 4.

Tel qu'illustré sur la figure 2, en phase de repos, le tampon de butée 28 présente une longueur maximale. Les deux coussinets 29, 31 et le manchon 30 sont au repos ou détendus.

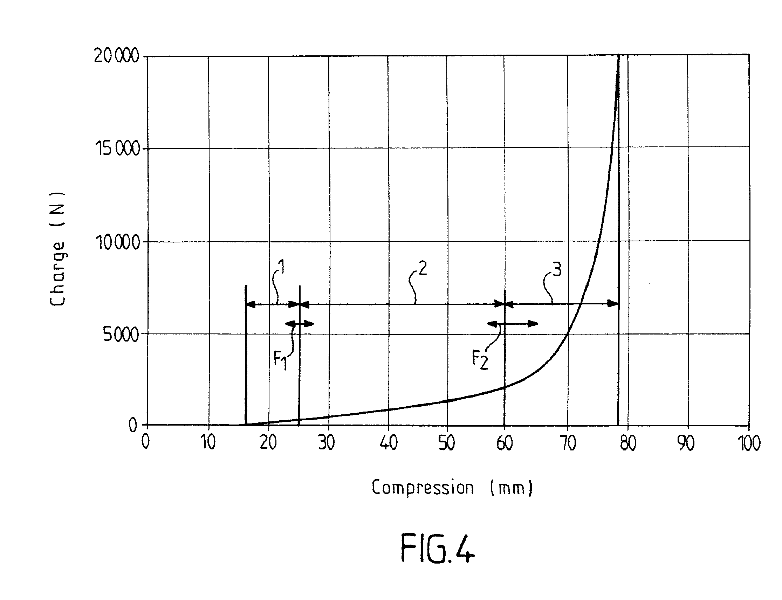

Lors d'un mouvement de compression, c'est-à-dire lorsque le cylindre 25 effectue un mouvement de translation le long de la tige de piston 26 vers le palier de raccordement 24 et comprime le tampon de butée 28 se trouvant sur sa course, trois phases principales d'amortissement vont être constatées sur la courbe de compression (figure 4).

La première phase correspond à une zone dite de confort. Cette phase débute peu après le début de course de compression de l'amortisseur, lorsque le cylindre 26 rentre en contact avec le premier coussinet 29 après environ 15 mm de course. Le premier coussinet 29 va fournir, lors de sa compression un amortissement confortable, sans à-coup et ceci pour de faibles charges. En se référant au graphique 4, on constate que pour des charges allant jusqu'à environ 500 N, c'est-à-dire pour de faibles chocs ou vibrations, il y a une variation de la course de compression de l'ordre de 10 mm. Ce déplacement correspond à la zone de confort induite par le premier coussinet. Lorsque celui-ci est écrasé à son maximum et qu'il vient buter contre la surface extérieure de la portée annulaire 32 du manchon 30, la deuxième phase d'amortissement débute.

Cette deuxième phase correspond à la déformation du manchon 30. Toutefois, comme cela figure sur le graphique 4 par une double flèche F1, il existe des zones de recouvrement, c'est-à-dire, que le premier coussinet 29 et le manchon 30 se déforment simultanément dans la zone de transition, afin d'amortir les chocs. Cette transition se situe aux alentours d'une course de compression de 25 mm pour des charges allant de 500 à environ 750 N. Lors de la deuxième phase, le manchon 30 en forme de soufflet va se déformer et fléchir radialement vers l'extérieur par rapport à l'axe X de façon à former un pli (figure 3). En fonction de l'augmentation de la charge à laquelle est soumis le manchon 30, la déformation radiale de celui-ci va s'accroître et ses extrémités 30a, 30b vont se rapprocher l'une de l'autre. En outre, le manchon va se rapprocher du palier de raccordement 24 sous l'action de ladite charge. D'après le graphique 4, le manchon 30 peut amortir des charges allant de 500 N à 2 000 N pour une course de compression de l'amortisseur allant de 25 à 60 mm (soit 35 mm). Le manchon amortit ainsi les chocs dans une zone dite « intermédiaire » entre la fin de la zone « de confort » jusqu'à la zone dite « d'arrêt ».

Lorsque la charge exercée sur le manchon 30 par le déplacement du cylindre 25 augmente davantage (au-dessus de 2 000 N), le fléchissement du manchon 30 forme un logement 35, comme cela est représenté sur la figure 3. Ce logement est défini par l'épaulement d'une part, et l'extrémité liée au palier de raccordement 24 d'autre part. Le manchon 30 se situe alors à son maximum de compression et entraîne dans son mouvement vers le palier de raccordement 24, le coussinet de fin de course 31. Celui-ci va ainsi venir butée contre l'extrémité 30b liée au palier de raccordement 24 et remplir le logement 35 au fur et à mesure que la charge augmente. La longueur et la forme du coussinet de fin de course 31 sont définies afin de jouer le rôle d'un tampon supplémentaire à partir de la fin de la zone « intermédiaire » jusqu'à la zone « d'arrêt ». Il s'agit ici, de la troisième phase d'amortissement. Entre la zone intermédiaire (phase 2) et la zone de butée (phase 3), il existe des zones de recouvrement représenté par des doubles flèches F2, où le manchon et le coussinet de fin de butée conjuguent leur action d'amortissement des chocs. Cette transition se situe pour des charges allant de 1 500 N jusqu'à environ 3 000 N (correspondant à une course de compression d'environ 58 à environ 65 mm, soit de 7 mm). En outre, comme cela figure sur la figure 4, lorsque la charge soumise est très élevée, le coussinet de fin de course 31 est compressé à son maximum. Celui-ci arrête alors les charges importantes, à partir de 3 000 N et plus (par exemple 20 000 N) et ceci pour un minimum de déplacement de la course de compression de l'amortisseur, d'environ 65 à environ 77 mm, soit un déplacement de seulement 12 mm.

En fonction des besoins de l'utilisateur, il est ainsi possible de régler l'agencement des coussinets sur le manchon afin d'obtenir les zones de recouvrement désirées. Les efforts et courses mentionnées pour chaque zone sont ajustables par définition pour satisfaire les exigences de l'application. Cet ajustement peut se faire indépendamment ou simultanément sur chaque zone.

Le fonctionnement selon le deuxième mode de réalisation, c'est-à-dire un tampon de butée 28 ne comprenant pas le coussinet de fin de course 31, est semblable au fonctionnement selon le premier mode de réalisation. La principale différence est que la fonction d'arrêt pour des charges très élevées est assurée par le manchon.

En ce qui concerne le troisième mode de réalisation, c'est-à-dire, un tampon de butée 28 ne comprenant pas le premier coussinet 29, le fonctionnement est également semblable au premier. La principale différence est que la fonction de confort de l'amortisseur en début de course de compression n'est plus assurée. Ce mode de réalisation présente l'avantage de nécessiter encore moins de mousse de polyuréthane.

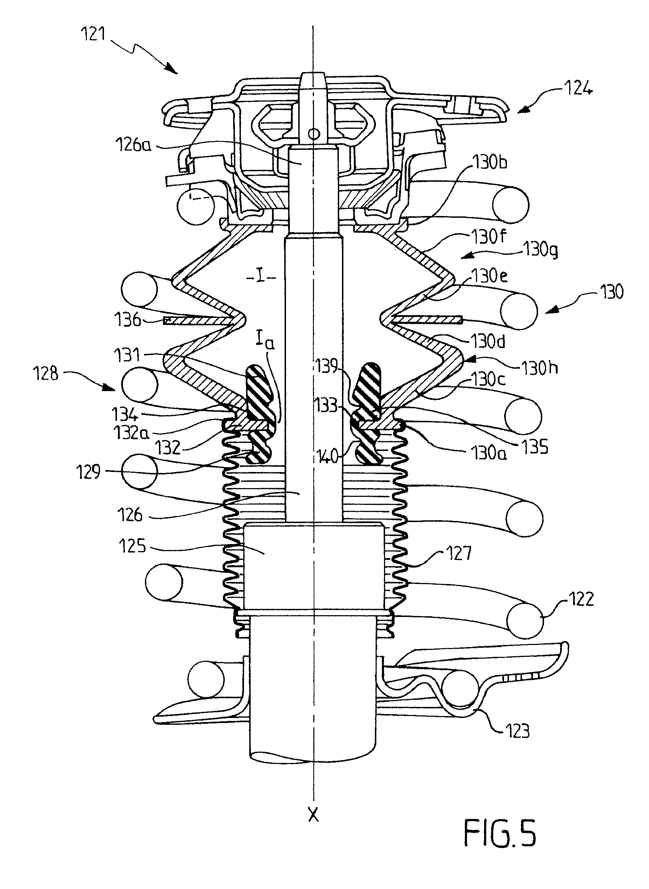

En se référant aux figures 5 à 7, une deuxième variante de réalisation va être décrite. Les éléments de la jambe de suspension 121 identiques ou similaires à la première variante de réalisation sont désignés par le même chiffre de référence augmenté du nombre 100 et ne sont pas décrits à nouveau.

Dans cette variante, les pièces du tampon de butée 130 sont disposées selon le premier mode de réalisation décrit ci-dessus, c'est-à-dire que les coussinets 129 et 131 sont monobloc et séparés par une portée annulaire 132.

Ici, le manchon 128 comporte deux plis 130g, 130h formés chacun par deux troncs de cône (respectivement 130f, 130e et 130d, 130c) coaxiaux se rejoignant par leur grande base. Les deux plis 130g, 130h se réunissent au niveau des deux petites bases des troncs de cônes 130e et 130d de manière à former un soufflet à deux plis. La petite base restée libre du deuxième pli 130h se prolonge par la portée annulaire 132, tandis que la petite base restée libre du premier pli 130g se prolonge par une rondelle 130b qui est fixée au palier de raccordement 124. La rondelle 130b correspond à l'extrémité du manchon 130.

Les deux plis 130g, 130h vont au fur et à mesure de la course de compression se rapprocher en se déformant radialement vers l'extérieur par rapport à l'axe X à partir de leur partie médiane. Ainsi, le manchon 130 peut, du fait de son agencement, se rétracter plus facilement en prenant le moins d'espace possible le long de la tige d'amortisseur 126.

En outre, l'épaisseur du premier pli 130g est inférieure à l'épaisseur du deuxième pli 130h du manchon 130, de manière à obtenir une raideur du premier pli 130g inférieure à celle du deuxième 130h. Cette caractéristique permet d'obtenir deux phases d'amortissement lors de la course de compression en phase 2, c'est-à-dire lors de la phase d'amortissement liée à la déformation du manchon. Bien entendu, il est possible d'intervertir l'épaisseur des plis : le pli 130g peut être plus épais que le pli 130h présentant ainsi une raideur supérieure par rapport au pli 130h. Dans ce cas, celui-ci va se fléchir plus rapidement.

Les deux plis 130g, 130h sont séparés par une rondelle 136. La rondelle 136 est ici solidaire du manchon 130. Elle peut être obtenue lors du moulage de ce dernier. La rondelle 136 a pour fonction de rendre indépendant la déformation d'un pli par rapport à un autre lors de la course de compression. La rondelle 136 va en effet maintenir constant le diamètre du manchon 130 au niveau de la jonction des petites bases formée par les troncs de cône 130d et 130e. De plus, la taille de la rondelle peut varier suivant l'effet recherché.

Tout comme lors de la première variante de réalisation, le manchon 130 ne présente pas de zone de contact (espace -I-) avec la tige d'amortisseur 126 en phase de repos ou en phase de compression. En outre, sur la paroi interne du tronc de cône 130c du soufflet 130h figure un épaulement 134, de manière à former un logement 135 pour le deuxième coussinet 131 que ce soit en phase de repos ou en phase de compression. Le logement 135 est ainsi formé par ledit épaulement 134 du soufflet 130h d'une part et par l'extrémité 130b en forme de rondelle d'autre part. En effet, lors de la compression de l'amortisseur, le fléchissement successif ou non des deux plis 130g et 130h va laisser pour le coussinet de fin de course 131, un espace réduit correspondant au logement 135, entre la tige d'amortisseur 126 et le manchon 130.

Le premier coussinet 129 et le deuxième coussinet 131 sont monobloc. Ils sont reliés par un pont de faible épaisseur 133. Les coussinets 129, 131 font saillies respectivement à l'extérieur et à l'intérieur de la portée annulaire 132 du deuxième pli 130h. Dans un mode préférentiel, lesdits coussinets 129, 131 présentent tous les deux un creux en leur milieu, respectivement 139, 140, de manière à obtenir un volume de matière (mousse de polyuréthane) à l'état compressé qui soit réduit.

Les coussinets 129, 131 ne présentent pas de zone de contact (espace -Ia-) avec la tige d'amortisseur 126 lors de la phase de repose de la jambe de suspension, tandis que lors de la phase de compression, le contact n'a lieu que sur environ les dix derniers pourcents de la course de compression.

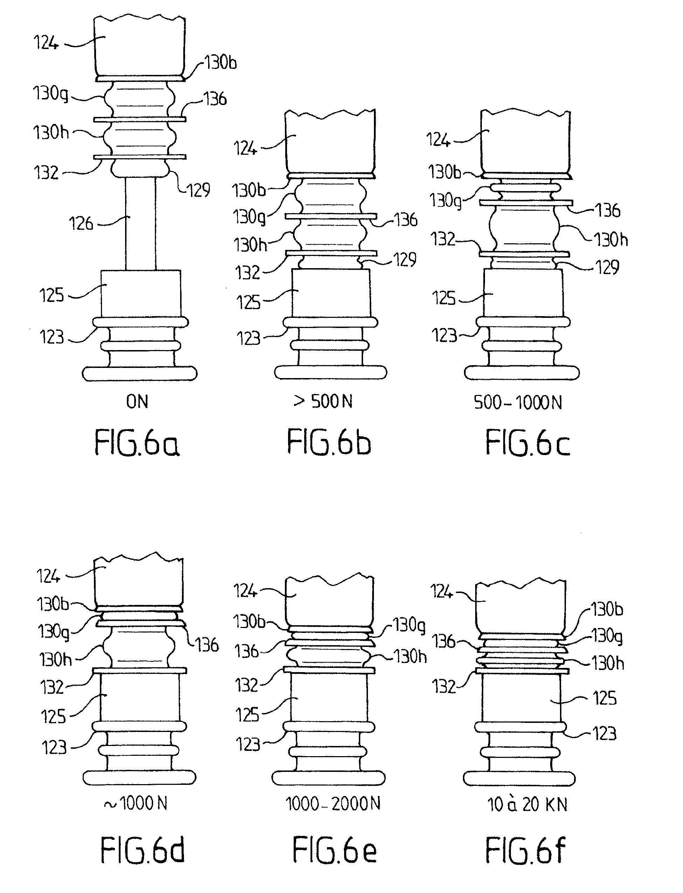

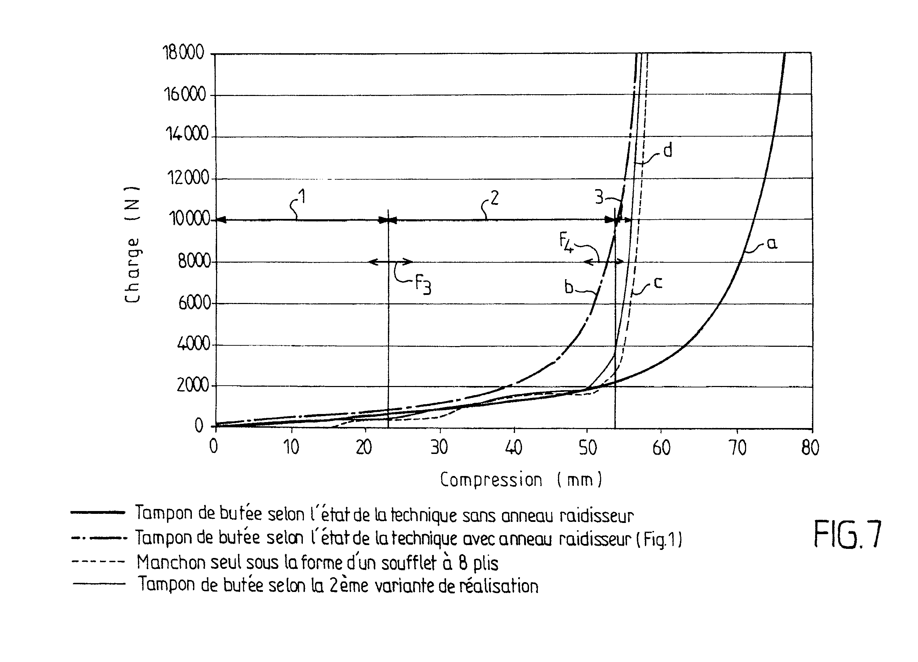

Le fonctionnement de ce mode de réalisation, illustré par la figure 6 et la figure 7, diffère légèrement par rapport au fonctionnement de la jambe de suspension selon le premier mode de réalisation.

La figure 6a montre une jambe de suspension au repos. La jambe de suspension 121 est au repos et les deux coussinets 129, 131 ainsi que le manchon 130 sont détendus.

Lors d'un mouvement de compression (figure 6b à 6f), le cylindre 126 entre en contact avec le premier coussinet 129 (figure 6b). Le rôle du premier coussinet 129 est le même que pour les autres modes de réalisation ci-dessus. Celui-ci a pour fonction d'amortir les faibles chocs et de créer une zone de confort (phase 1). Le premier coussinet peut amortir des chocs supérieurs à 500 N (figure 6b). Il est possible suivant la courbe de compression souhaitée, d'amortir des chocs plus élevés, par exemple de 1 000 N (figure 6c). Il suffit pour cela de faire varier l'épaisseur et la forme du premier coussinet 129. D'après la figure 7, le premier coussinet amortit des charges de 0 à 750 N pour une course de compression de 0 à 23 mm.

Lorsque le premier coussinet est proche d'être compressé à son maximum (de l'ordre de 1 000 N, figure 6c), le manchon a déjà commencé à se déformer. D'après la courbe c de la figure 7, le manchon commence en effet à se fléchir à partir de 15 mm. La première zone de recouvrement se situe ainsi pour des chocs allant d'environ 500 N à environ 1 000 N pour une course de compression de 15 mm à 30 mm. Cette zone de transition est d'ailleurs représentée sur la figure 7 par la double flèche F3. Le manchon commence ainsi à se compresser pour des charges inférieures à environ 1 000 N, c'est-à-dire aux environs de 700 N. Comme illustré sur la figure 6c, la déformation du manchon débute au niveau du premier pli 130g, soit le pli le plus éloigné du cylindre. En effet, comme indiqué plus haut, la raideur du deuxième pli 130h est supérieure à celle du premier pli 130g, ainsi celui-ci se fléchit plus rapidement à charges équivalentes. Pour une charge de l'ordre de 1 000 N, le cylindre vient buter contre la portée annulaire 132 et le pli 130g continue à se compresser entre la rondelle 136 et le palier de raccordement 124 (figure 6d). Le plis 130g absorbe les chocs allant d'environ 2 000 N à environ 5 000 N environ pour une course de compression assez courte de l'ordre de 4 mm, d'environ 50 mm à environ 54 mm.

Aux alentours de 2 000 N, le pli 130h va se déplacer vers le palier de raccordement 124. Lors de ce déplacement, le pli 130h va se fléchir radialement vers l'extérieur à partir de sa partie médiane par rapport à l'axe X. Ce mouvement du pli 130h va entraîner au fur et à mesure de la course de compression, le deuxième coussinet 131 à venir s'écraser contre le logement 135. Le pli 130h et le deuxième coussinet 131 vont ainsi conjuguer leur action d'amortissement des chocs sur une zone de transition représentée par la double flèche F4. Cette zone de transition se situe pour des charges allant d'environ 2 000 N à environ 5 000 N correspondant à une faible course de compression d'environ 4 mm, de l'ordre de 50 mm à environ 54 mm (figures 6e et 7). A partir d'environ 5 000 N (figure 6f), le deuxième pli 130h est comprimé à son maximum, seul le deuxième coussinet 131 peut s'écraser davantage afin d'amortir les chocs les plus élevés. Ainsi, le coussinet 131 amortit des chocs allant de 5 000 N à 20 000 N et plus pour une faible course de compression de l'amortisseur, de l'ordre de 3 mm, d'environ 54 mm à environ 57 mm. Le deuxième pli 130h et le deuxième coussinet 131 jouent ici le rôle de tampon supplémentaire, afin d'obtenir une raideur accrue dans la courbe de compression.

Cette variante présente l'avantage d'augmenter davantage la pente de la courbe de compression. En effet, le tampon 128 présente une raideur supérieure par rapport à la première variante de réalisation. Cette raideur est obtenue par l'ajout d'un pli supplémentaire au sein du manchon 30 et d'une rondelle 136 qui permet de maintenir le manchon 130 en forme de soufflet à deux plis (130g, 130h).

De plus, la pente de la courbe de compression est accrue par rapport à l'art antérieur (courbes a et b), c'est-à-dire que le tampon selon la seconde variante de réalisation permet pour une faible course de compression de l'amortisseur d'amortir des charges maximales. Il faut fournir en effet un effort ou une charge supplémentaire sur le tampon 128 de la présente invention afin d'obtenir le même déplacement de la course compression de l'amortisseur en utilisant des tampons de butée selon l'art antérieur (courbe a et b).

L'ajout d'un pli supplémentaire et d'une rondelle 136 a pour conséquence de réduire la longueur de course de compression maximale de l'amortisseur. Toutefois, comme ceci est illustré sur le graphique 7, cette course de compression reste légèrement supérieure par rapport à celle obtenue en utilisant un tampon de l'art antérieur tel que représenté à la figure 1 (courbe b).

En outre, cet ajout de matière assure également une meilleure durée de vie du tampon de butée dans le temps.

Il est évident que cette deuxième variante de réalisation peut s'associer, tout comme lors de la première variante de réalisation, au second (tampon 128 sans le coussinet de fin de course 131) et troisième mode de réalisation (tampon 128 sans le premier coussinet 129) décrits ci-dessus.

D'autres variantes sont possibles pour les modes de réalisation précités. Par exemple, la forme du manchon 30, 130 peut varier de manière à obtenir une courbe de compression désirée suivant l'utilisation finale du tampon de butée 28, 128 (amortisseur pour véhicules automobiles de différents types ou machines industrielles...).

Il est possible en effet de faire varier l'épaisseur des parois du manchon 30, 130. En effet, plus l'épaisseur des parois du manchon 30, 130 sera importante et plus on obtiendra de la raideur dans la courbe de compression. Ainsi, il faudra exercer une force, ou une charge plus importante pour obtenir un même déplacement.

Il est possible de faire varier également la forme du manchon 30, 130. Par exemple, celui-ci peut être de forme annulaire ou quelconque (les plis peuvent ne pas être symétriques par rapport à l'axe X ou encore le manchon peut ne pas être en forme de soufflet à plis). Des ouvertures peuvent être insérées notamment aux extrémités du manchon 30, 130 afin d'améliorer la souplesse dudit manchon. Des plis supplémentaires peuvent être ajoutés au manchon 30, 130, de manière à accroître la raideur du tampon.

L'épaisseur des plis peut également varier au sein du même pli. Par exemple, un pli pourra présenter à son sommet une épaisseur de 1 mm et à sa base, une épaisseur de 3 mm.

Il est également possible de jouer sur un autre paramètre, qui est la taille du pli afin d'obtenir la courbe de compression désirée.

Les plis auront pour fonction suivant leur répartition sur le manchon, leurs tailles, leurs épaisseurs d'assurer soit une fonction de confort pour amortir les faibles chocs (première zone de recouvrement en se référant au graphique 4), soit d'arrêter les chocs (troisième phase).

Les extrémités 30a, 30b, 130a, 130b du manchon 130 peuvent présenter chacune un épaulement 34, 134 en vis-à-vis sur la surface inférieure dudit manchon 130, de façon à définir ensemble un logement 35, 135 pour la coussinet de fin de course 31, 131, lors de la course de compression de l'amortisseur. L'épaulement peut également être situé sur la paroi interne du tronc de cône 130d du pli 130h du manchon 130.

Le soufflet 27, 127 de la jambe de suspension 21, 121 peut ne pas être nécessaire. Par exemple, le tampon 28, 128 peut présenter une longueur assez grande afin d'atteindre le cylindre 25, 125 et par conséquent de protéger la tige d'amortisseur 26, 126 même en phase de repos de l'amortisseur. Le tampon 28, 128 assure dans ce cas le rôle habituel du soufflet, c'est-à-dire la protection de la tige d'amortisseur 26, 126 des agressions extérieures (poussières...).

Ces différentes variantes combinées aux différentes possibilités d'agencement du ou des coussinets 29, 31, 129, 131 avec le manchon 30, 130 offrent ainsi une large gamme de courbes de compression possibles selon la fonction que l'utilisateur veut attribuer au tampon de butée.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Tampon de butée (28, 128) en matière flexible et/ou compressible destiné à une jambe de suspension (21, 121), **caractérisé en ce que** ledit tampon de butée (28, 128) comprend au moins deux pièces :
- un coussinet de début de course (29, 129), dit premier coussinet, destiné à amortir les chocs en début de course de compression de l'amortisseur, dans une zone dite de confort,
- un manchon (30, 130) qui assure la fonction d'amortissement sur le reste de la course de compression,
le manchon étant relié à une de ses extrémités au premier coussinet, de façon qu'il fasse saillie à l'extérieur dudit manchon, dans la direction axiale (X) de ce dernier, ledit manchon étant destiné à être relié à son autre extrémité par exemple à la caisse d'un véhicule ou à un bâti d'une machine.

2. Tampon de butée (28, 128) en matière flexible et/ou compressible destiné à une jambe de suspension, **caractérisé en ce que** ledit tampon de butée (28, 128) comprend au moins deux pièces :
- un manchon qui assure la fonction d'amortissement au cours de la course de compression de l'amortisseur,
- un coussinet de fin de course, dit deuxième coussinet, destiné à servir de butée de fin de course de compression de l'amortisseur,
le manchon (30, 130) étant relié à une de ses extrémités au coussinet de fin de course (31, 131), de façon qu'il fasse saillie à l'intérieur dudit manchon, dans la direction axiale (X) de ce dernier, ledit manchon étant destiné à être relié à son autre extrémité par exemple à la caisse d'un véhicule ou à un bâti d'une machine.

3. Tampon de butée selon la revendication 1, **caractérisé en ce que** ledit tampon de butée comprend une troisième pièce : un coussinet de fin de course (31, 131) dit deuxième coussinet destiné à servir de butée de fin de course de compression de l'amortisseur, le deuxième coussinet (31, 131) étant relié à la même extrémité du manchon (30, 130) que le premier coussinet (29, 129), de façon que le deuxième coussinet (31, 131) fasse sailli à l'intérieur dudit manchon dans ladite direction axiale (X).

4. Tampon de butée selon la revendication 3, **caractérisé en ce que** le premier coussinet (29, 129) et le deuxième coussinet (31, 131) sont monobloc.

5. Tampon de butée selon l'une des revendications précédentes, **caractérisé en ce que** l'extrémité du manchon (30, 130) qui est reliée à au moins un coussinet (29, 129 ou 31, 131) comprend une portée annulaire plane sensiblement perpendiculaire à ladite direction axiale (X), le(s) coussinet(s) (29, 129, 31, 131) prenant appui sur ladite portée annulaire lors de la course de compression de l'amortisseur.

6. Tampon de butée selon l'une des revendications précédentes, **caractérisé en ce que** le manchon (30, 130) est en forme de soufflet à un ou plusieurs plis (130g, 130h), dont la partie médiane du ou des plis s'étend radialement vers l'extérieur.

7. Tampon de butée selon la revendication 6, **caractérisé en ce que** le manchon (30, 130) en forme de soufflet comprend un ou plusieurs plis (130g, 130h) dont l'épaisseur varie au sein du même pli et/ou entre deux plis distincts.

8. Tampon de butée selon l'une des revendications 6 et 7, **caractérisé en ce que** le manchon (130) en forme de soufflet comprend au moins deux plis (130g, 130h) et une rondelle (136) au niveau de la jonction de deux plis (130g, 130h), de manière à rendre indépendant la déformation d'un pli par rapport à un autre lors de la course de compression de l'amortisseur.

9. Tampon de butée selon la revendication 8, **caractérisé en ce que** le pli (130h) le plus proche du ou des coussinets (129, 131) présente une raideur plus grande que le ou les autres plis (130g).

10. Tampon de butée selon la revendication 2 ou 3, prise en combinaison avec l'une des revendications précédentes, **caractérisé en ce que** au moins une desdites extrémités du manchon (30, 130) présente un épaulement (34, 134) sur sa face intérieure, de sorte que lorsque le tampon est en fin de course de compression, ledit épaulement forme un logement (35, 135) pour le deuxième coussinet afin de limiter sa compression.

11. Tampon de butée selon l'une quelconque des revendications précédentes, **caractérisé en ce que** le manchon (30, 130) est en matière plastique déformable.

12. Tampon de butée selon l'une quelconque des revendications précédentes, **caractérisé en ce que** les coussinets (29, 129, 31, 131) sont en matière flexible ou compressible, de préférence en mousse de polyuréthane.

13. Jambe de suspension (21, 121) comprenant le tampon de butée (28, 128) selon l'un quelconque des revendications 1 à 12, un palier de raccordement (24, 124) pour une tige d'amortisseur (26, 126), ledit palier de raccordement (24, 124) étant destiné à être relié à une caisse de véhicule, une coupelle (23, 123) reliée à un cylindre d'amortisseur (25, 125), un ressort (22, 122) situé entre ladite coupelle (23, 123) et le palier de raccordement (24, 124), et éventuellement un soufflet de protection afin de protéger la jambe de suspension, une tige d'amortisseur (26, 126) coulissant dans le cylindre d'amortisseur (25, 125), **caractérisée en ce que** le manchon (30, 130) du tampon de butée (28, 128) est relié à une de ses extrémités au palier de raccordement (24, 124) et le cas échéant à son autre extrémité au soufflet de protection, ledit cylindre d'amortisseur (25, 125) étant apte à venir en appui sur ledit tampon de butée (28, 128) lors de la course de compression.

14. Jambe de suspension selon la revendication 13, comprenant un tampon de butée (28, 128) selon la revendication 1, **caractérisée en ce que** le premier coussinet (29, 129) est disposé, le cas échéant à l'intérieur du soufflet, pour venir en butée contre le cylindre (25, 125) lors du début de course de compression.

15. Jambe de suspension selon l'une quelconque des revendications 13 à 14, **caractérisée en ce que** le manchon (30, 130) dudit tampon de butée (28, 128) ne présente pas de zone de contact avec la tige d'amortisseur (26, 126) lors de la phase de compression et/ou de décompression.

## Revendications modifiées

### Revendications modifiées conformément à la règle 86(2) CBE.

**1.** Tampon de butée (28, 128) en matière flexible et/ou compressible destiné à une jambe de suspension, **caractérisé en ce que** ledit tampon de butée (28, 128) comprend au moins deux pièces :
- un manchon qui assure la fonction d'amortissement au cours de la course de compression de l'amortisseur,
- un coussinet de fin de course, dit deuxième coussinet, et destiné à servir de butée agissant seulement en fin de course de compression de l'amortisseur,
le manchon (30, 130) étant relié à une de ses extrémités au coussinet de fin de course (31, 131), de façon qu'il fasse saillie à l'intérieur dudit manchon, dans la direction axiale (X) de ce dernier, ledit manchon étant destiné à être relié à son autre extrémité par exemple à la caisse d'un véhicule ou à un bâti d'une machine.

**2.** Tampon de butée selon la revendication 1, **caractérisé en ce que** ledit tampon de butée comprend une troisième pièce : un coussinet de début de course (29, 139) dit premier coussinet destiné à amortir les chocs en début de course de compression de l'amortisseur, le premier coussinet (29, 129) étant relié à la même extrémité du manchon (30, 130) que le deuxième coussinet (31, 131), de façon que le premier coussinet (29, 129) fasse saillie à l'extérieur dudit manchon dans ladite direction axiale (X).

**3.** Tampon de butée selon la revendication 2, **caractérisé en ce que** le premier coussinet (29, 129) et le deuxième coussinet (31, 131) sont monobloc.

**4.** Tampon de butée selon l'une des revendications précédentes, **caractérisé en ce que** l'extrémité du manchon (30, 130) qui est reliée à au moins un coussinet (29, 129 ou 31, 131) comprend une portée annulaire plane sensiblement perpendiculaire à ladite direction axiale (X), le(s) coussinet(s) (29, 129, 31, 131) prenant appui sur ladite portée annulaire lors de la course de compression de l'amortisseur.

**5.** Tampon de butée selon l'une des revendications précédentes, **caractérisé en ce que** le manchon (30, 130) est en forme de soufflet à un ou plusieurs plis (130g, 130h), dont la partie médiane du ou des plis s'étend radialement vers l'extérieur.

**6.** Tampon de butée selon la revendication 5, **caractérisé en ce que** le manchon (30, 130) en forme de soufflet comprend un ou plusieurs plis (130g, 130h) dont l'épaisseur varie au sein du même pli et/ou entre deux plis distincts.

**7.** Tampon de butée selon l'une des revendications 5 et 6, **caractérisé en ce que** le manchon (130) en forme de soufflet comprend au moins deux plis (130g, 130h) et une rondelle (136) au niveau de la jonction de deux plis (130g, 130h), de manière à rendre indépendant la déformation d'un pli par rapport à un autre lors de la course de compression de l'amortisseur.

**8.** Tampon de butée selon la revendication 7, **caractérisé en ce que** le pli (130h) le plus proche du ou des coussinets (129, 131) présente une raideur plus grande que le ou les autres plis (130g).

**9.** Tampon de butée selon l'une quelconque des revendications précédentes, **caractérisé en ce que** au moins une desdites extrémités du manchon (30, 130) présente un épaulement (34, 134) sur sa face intérieure, de sorte que lorsque le tampon est en fin de course de compression, ledit épaulement forme un logement (35, 135) pour le deuxième coussinet afin de limiter sa compression.

**10.** Tampon de butée selon l'une quelconque des revendications précédentes, **caractérisé en ce que** le manchon (30, 130) est en matière plastique déformable.

**11.** Tampon de butée selon l'une quelconque des revendications précédentes, **caractérisé en ce que** les coussinets (29, 129, 31, 131) sont en matière flexible ou compressible, de préférence en mousse de polyuréthane.

**12.** Jambe de suspension (21, 121) comprenant le tampon de butée (28, 128) selon l'un quelconque des revendications 1 à 11, un palier de raccordement (24, 124) pour une tige d'amortisseur (26, 126), ledit palier de raccordement (24, 124) étant destiné à être relié à une caisse de véhicule, une coupelle (23, 123) reliée à un cylindre d'amortisseur (25, 125), un ressort (22, 122) situé entre ladite coupelle (23, 123) et le palier de raccordement (24, 124), et éventuellement un soufflet de protection afin de protéger la jambe de suspension, une tige d'amortisseur (26, 126) coulissant dans le cylindre d'amortisseur (25, 125), **caractérisée en ce que** le manchon (30, 130) du tampon de butée (28, 128) est relié à une de ses extrémités au palier de raccordement (24, 124) et le cas échéant à son autre extrémité au soufflet de protection, ledit cylindre d'amortisseur (25, 125) étant apte à venir en appui sur ledit tampon de butée (28, 128) lors de la course de compression.

**13.** Jambe de suspension selon la revendication 12, comprenant un tampon de butée (28, 128) selon la revendication 1, **caractérisée en ce que** le premier coussinet (29, 129) est disposé, le cas échéant à l'intérieur du soufflet, pour venir en butée contre le cylindre (25, 125) lors du début de course de compression.

**14.** Jambe de suspension selon l'une quelconque des revendications 11 à 13, **caractérisée en ce que** le manchon (30, 130) dudit tampon de butée (28, 128) ne présente pas de zone de contact avec la tige d'amortisseur (26, 126) lors de la phase de compression et/ou de décompression.
